(19) **Europäisches Patentamt / European Patent Office / Office européen des brevets**

(11) **EP 2 825 347 B1**

(12) **FASCICULE DE BREVET EUROPEEN**

(45) Date de publication et mention
de la délivrance du brevet:
**29.07.2020 Bulletin 2020/31**

(21) Numéro de dépôt: **13708491.9**

(22) Date de dépôt: **12.03.2013**

(51) Int Cl.:
**B23K 26/361** *(2014.01)* **B23K 26/082** *(2014.01)*
**B23K 26/0622** *(2014.01)*

(86) Numéro de dépôt international:
**PCT/EP2013/055008**

(87) Numéro de publication internationale:
**WO 2013/135703 (19.09.2013 Gazette 2013/38)**

(54) **PROCÉDÉ DE GRAVAGE D'UN ÉLÉMENT D'HORLOGERIE**

GRAVIERUNGSVERFAHREN EINES UHRELEMENTS

METHOD OF ETCHING A WATCH ELEMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.03.2012 EP 12159120**
**18.06.2012 EP 12172383**

(43) Date de publication de la demande:
**21.01.2015 Bulletin 2015/04**

(73) Titulaire: **ROLEX SA**
**1211 Genève 26 (CH)**

(72) Inventeur: **OLIVEIRA, Alexandre**
**F-74000 Annecy (FR)**

(74) Mandataire: **Moinas & Savoye SARL
19A, rue de la Croix-d'Or
1204 Genève (CH)**

(56) Documents cités:
**WO-A2-2008/097374  DE-A1- 2 538 660
DE-A1-102004 031 740  US-A1- 2004 195 221
US-A1- 2005 211 680  US-A1- 2011 194 574**

- **VOROBYEV A ET AL: "Colorizing metals with
femtosecond laser pulses", APPLIED PHYSICS
LETTERS, AIP, AMERICAN INSTITUTE OF
PHYSICS, MELVILLE, NY, US, vol. 92, no. 4, 31
janvier 2008 (2008-01-31), pages 41914-41914,
XP012107943, ISSN: 0003-6951, DOI:
10.1063/1.2834902**

EP 2 825 347 B1

Printed by Jouve, 75001 PARIS (FR)

**Description**

L'invention concerne un procédé de gravage comme décrit dans le préambule de la revendication 1 (voir, par exemple, US 2004/195221 A1).

Lorsque l'on souhaite réaliser sur une pièce en acier une creusure dont le fond est coloré, on utilise traditionnellement des procédés d'usinage, de gravage et de coloration chimiques, qui nécessitent l'utilisation de masques ainsi que de composés hautement toxiques comme le chrome Cr(VI) pour obtenir un bon résultat. Outre le problème d'utilisation de composés toxiques, les procédés sont longs et difficiles à mettre en œuvre car ils sont réalisés en plusieurs étapes.

Il convient de noter que les applications horlogères sont très exigeantes pour un tel procédé : l'aspect esthétique est très important et le gravage et la coloration doivent être exempts de défauts ou de bavures. Les exigences au niveau de la robustesse sont également élevées, car les composants ainsi gravés et colorés sont susceptibles d'être des composants d'habillement soumis aux chocs et à l'environnement (lunette, glace, fond, carrure par exemple). En tous les cas, les pièces doivent subir un nettoyage poussé après usinage, et la coloration doit avoir une adhérence suffisante pour résister à un tel traitement.

La demande de brevet EP0647720 décrit l'utilisation d'un laser nanoseconde avec un taux de répétition des impulsions de l'ordre du kHz, permettant d'obtenir une couleur rouge sur une surface d'acier, avec une couleur dépendant de la densité de puissance.

Le brevet US6180318 mentionne une coloration sur une surface métallique avec une « couche d'imagerie » comprenant une couche de métal et d'oxyde métallique. Cette couche supplémentaire est indispensable pour obtenir la coloration désirée. Le document mentionne en particulier une couche d'imagerie aluminium/alumine.

Le document WO9411146 relate l'utilisation d'impulsions laser d'une durée supérieure à 5 ns afin de produire des zones colorées (foncées) sur une surface, en particulier sur une surface comprenant un revêtement à base de chrome.

La demande WO2011163550 décrit l'obtention de marquages sur une surface d'acier avec un laser picoseconde, sur de l'acier, par la création de structures périodiques à la surface.

La demande WO2008097374 relate la création de nanostructures périodiques à la surface d'un échantillon métallique par laser femtoseconde. Ces structures permettent d'obtenir des couleurs (noir, gris, doré), ainsi que la modification de surfaces. Une couleur noire est réalisée sur de l'aluminium, avec une intensité de noir donnée par la fluence du laser.

Le but de l'invention est de fournir un procédé de gravage d'une pièce horlogère permettant de remédier aux inconvénients mentionnés précédemment et d'améliorer les procédés connus de l'art antérieur. En particulier, l'invention propose un procédé de gravage permettant de simplifier les procédés connus. Un procédé de gravage selon l'invention est défini par la revendication 1.

Différents modes d'exécution du procédé de gravage sont définis par les revendications dépendantes 2 à 9.

Dans une variante combinable avec les différents modes d'exécution, sauf incompatibilité technique, la coloration de la surface de fond d'usinage peut être différente de la surface de la pièce avant enlèvement de matière.

Dans une variante combinable avec les différents modes d'exécution et avec les variantes précédentes, sauf incompatibilité technique, les paramètres d'application du faisceau peuvent être différents lors de l'usinage et lors de la coloration.

Dans une variante combinable avec les différents modes d'exécution et avec les variantes précédentes, sauf incompatibilité technique, le taux de recouvrement latéral (ou plus généralement selon une autre direction) peut être inférieur à 60%, voire environ égal à 50%, voire inférieur à 10%, voire inférieur à 5%, voire nul ou sensiblement nul.

Dans une variante combinable avec les différents modes d'exécution et avec les variantes précédentes, sauf incompatibilité technique, la pièce peut être en matériau massif.

Dans une variante combinable avec les différents modes d'exécution et avec les variantes précédentes, sauf incompatibilité technique, la pièce peut être en matériau comportant au moins 75% en poids d'or.

Dans une variante combinable avec les différents modes d'exécution et avec les variantes précédentes, sauf incompatibilité technique, on peut focaliser le faisceau sur la surface de la pièce ou sensiblement sur la surface de la pièce.

Dans une variante combinable avec les différents modes d'exécution et avec les variantes précédentes, sauf incompatibilité technique, l'enlèvement de matière et la coloration peuvent être réalisés sans apport externe de matière.

Dans une variante combinable avec les différents modes d'exécution et avec les variantes précédentes, sauf incompatibilité technique, l'enlèvement de matière peut provoquer la réalisation d'une creusure d'une profondeur supérieure à 10 $\mu$m, en particulier supérieure à 40 $\mu$m.

Dans une variante combinable avec les différents modes d'exécution et avec les variantes précédentes, sauf incompatibilité technique, la coloration de la surface de fond d'usinage peut être une coloration noire ou une coloration blanche.

Dans une variante combinable avec les différents modes d'exécution et avec les variantes précédentes, sauf incompatibilité technique, la fréquence de répétition des impulsions peut être comprise entre 1kHz et 300kHz.

Dans une variante combinable avec les différents modes d'exécution et avec les variantes précédentes, sauf incompatibilité technique, la longueur d'onde du laser peut être comprise entre 300 nm et 1100 nm.

Dans une variante combinable avec les différents modes d'exécution et avec les variantes précédentes, sauf incompatibilité technique, la puissance du faisceau peut être comprise entre 1 W et 6 W, par exemple 1.4 W à 1 kHz et 5.5 W à 300 kHz.

Dans une variante combinable avec les différents modes d'exécution et avec les variantes précédentes, sauf incompatibilité technique, l'énergie des impulsions peut être comprise entre 0.5 $\mu$J et 2mJ, en particulier entre 5$\mu$J et 100$\mu$J.

Dans une variante combinable avec les différents modes d'exécution et avec les variantes précédentes, sauf incompatibilité technique, on peut régler l'énergie du faisceau à l'aide d'une lame demi-onde et/ou d'un cube séparateur polarisant, la lame demi-onde permettant de tourner la polarisation linéaire du faisceau et/ou le cube polariseur permettant de transmettre la polarisation parallèle au plan de propagation du faisceau et dévier la polarisation perpendiculaire au plan de propagation.

Dans une variante combinable avec les différents modes d'exécution et avec les variantes précédentes, sauf incompatibilité technique, on peut déplacer le faisceau laser sur la pièce selon des courbes, en particulier des lignes, parallèles ou sensiblement parallèles.

Dans une variante combinable avec les différents modes d'exécution et avec les variantes précédentes, sauf incompatibilité technique, on peut déplacer le faisceau laser sur la pièce selon des courbes, en particulier des lignes, orientées différemment dans les différentes passes du procédé. En particulier, on peut déplacer le faisceau laser selon des lignes formant un angle, notamment un angle droit, dans les passes successives du procédé.

Dans une variante combinable avec les différents modes d'exécution et avec les variantes précédentes, sauf incompatibilité technique, le diamètre du faisceau laser peut être compris entre 5 $\mu$m et 60 $\mu$m, en particulier entre 20 et 30 $\mu$m, notamment environ 30 $\mu$m, notamment 27 $\mu$m.

Dans une variante combinable avec les différents modes d'exécution et avec les variantes précédentes, sauf incompatibilité technique, on peut déplacer le faisceau à une vitesse inférieure à 250 mm.s$^{-1}$, en particulier inférieure à 200 mm.s$^{-1}$.

Dans une variante combinable avec les différents modes d'exécution et avec les variantes précédentes, sauf incompatibilité technique, on peut réaliser plusieurs passes de déplacement du faisceau laser sur la pièce, en particulier environ 10 passes ou environ 20 passes.

Dans une variante combinable avec les différents modes d'exécution et avec les variantes précédentes, sauf incompatibilité technique, l'enlèvement de matière provoque la réalisation d'une creusure d'une profondeur moyenne supérieure ou égale à 4 $\mu$m par passe, en particulier supérieure ou égale à 8 $\mu$m par passe. Sauf incompatibilité technique, toutes les caractéristiques des variantes précédentes et/ou des modes d'exécution précédents peuvent être combinées librement entre elles.

Un élément ou une pièce selon l'invention est défini par la revendication 14 ou 15.

Un mécanisme horloger selon l'invention est défini par la revendication 16.

Une pièce d'horlogerie selon l'invention est définie par la revendication 17.

Le dessin annexé représente, à titre d'exemple, une illustration de modes d'exécution d'un procédé de gravage selon l'invention.

La figure 1 est une couronne obtenue par le procédé de gravage selon l'invention.

La figure 2 est un composant obtenu par le procédé de gravage selon l'invention.

La figure 3 est un schéma de principe du procédé de gravage selon l'invention.

La figure 4 illustre les principales caractéristiques d'une représentation spatiale, sur une pièce gravée, d'impacts dus à des impulsions de laser.

La figure 5 illustre une première représentation spatiale, sur une pièce gravée, d'impacts dus à des impulsions de laser.

La figure 6 illustre une deuxième représentation spatiale, sur une pièce gravée, d'impacts dus à des impulsions de laser.

La figure 7 illustre un premier mode de balayage d'un faisceau laser destiné à réaliser une creusure par application du procédé selon l'invention.

La figure 8 illustre un deuxième mode de balayage d'un faisceau laser destiné à réaliser une creusure par application du procédé selon l'invention.

Dans un mode d'exécution du procédé selon l'invention, on utilise les possibilités offertes par l'usinage laser femtoseconde pour graver et colorer en une seule opération une pièce ou un élément en matériau massif métallique ou non métallique. Ce procédé permet ainsi de réaliser des creusures dont la surface de fond montre une couleur différente de la couleur de base du matériau sans apport de matière additionnelle, et en particulier des surfaces noires sur l'or, le platine, l'acier ou le titane. Ce développement étend les possibilités d'usinage traditionnelles du laser femtoseconde et permet de réaliser en une seule opération une creusure dans une pièce en matériau métallique et d'en colorer le fond.

Il est ainsi possible de réaliser des creusures dans un substrat, notamment un substrat métallique, par exemple en acier, en titane, en or ou en platine, dont le fond est coloré en noir, en une seule opération d'usinage laser femtoseconde et sans apport de matière.

Il est aussi possible de réaliser des creusures dans un substrat, notamment un substrat en céramique ou en verre, par exemple en zircone, en alumine ou en saphir, dont le fond est coloré en blanc, en une seule opération d'usinage laser femtoseconde et sans apport de matière.

Dans un mode d'exécution du procédé de gravage d'une pièce, on applique sur la pièce un faisceau laser dont les impulsions durent chacune moins d'une picoseconde, de sorte à réaliser un usinage ou enlèvement de matière sur la pièce et une coloration de la surface de fond d'usinage. On utilise donc un laser femtoseconde.

Cette technique permet de réaliser des motifs de façon rapide, fiable, reproductible, et sans utilisation de produits nocifs pour l'environnement, et ce en une seule étape de procédé.

Un laser femtoseconde est un type de laser particulier qui produit des impulsions ultra-courtes dont la durée est de l'ordre de quelques femtosecondes à quelques centaines de femtosecondes (1 fs = 1 femtoseconde = $10^{-15}$ seconde). On utilise indifféremment les termes laser femtoseconde ou laser à impulsions femtosecondes.

La combinaison des deux étapes de gravage et de coloration au sein d'une même étape de procédé nécessite l'utilisation d'un laser à impulsions ultracourtes, notamment de type femtoseconde. En effet, il est crucial d'avoir des impulsions très courtes, de durée inférieure à la picoseconde, afin de minimiser les dommages au matériau.

Contrairement à ce qui est recherché dans l'art antérieur, à savoir obtenir des structures périodiques, des structures périodiques ne sont pas forcément désirées car les couleurs obtenues peuvent dépendre de l'angle de vision.

La pièce gravée peut être de différente nature, notamment il peut s'agir d'une couronne 1 de remontoir, d'un composant d'habillement d'horlogerie 3, par exemple d'une lunette, d'un réhaut, d'un fond de boîte de montre, d'un composant de boîte ou de bracelet de montre ; tout comme d'un composant d'un mouvement d'horlogerie comme par exemple une ébauche, une platine, un pont, une roue ou encore un balancier.

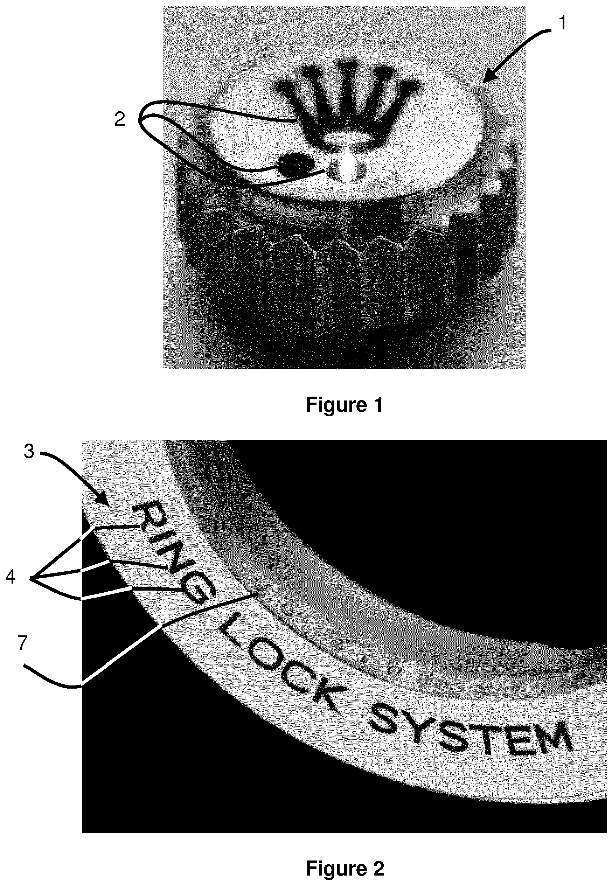

Sur la figure 1, une couronne de remontoir est représentée en cours de gravage par application du procédé selon l'invention. Des creusures 2, formant un motif, ont déjà été partiellement réalisées. Le fond de ces creusures montre une surface de couleur et d'aspect différents des autres surfaces du matériau, dans ce cas une couleur noire.

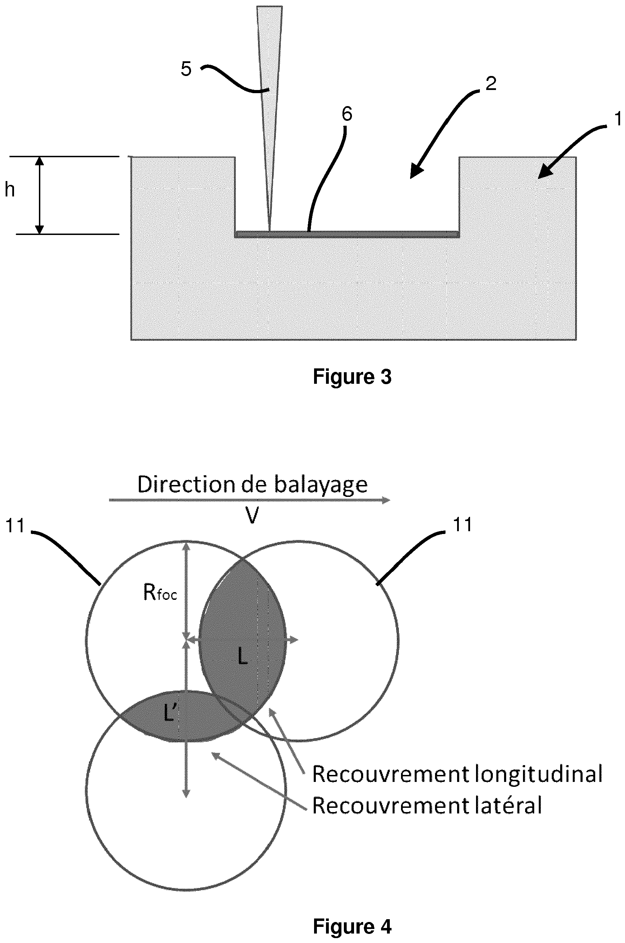

Sur la figure 2, un composant 3 est représenté après gravage par application du procédé selon l'invention. Des creusures 4, formant un motif, ont été réalisées. La figure 3 représente en coupe un schéma de principe du procédé de gravage selon l'invention. La pièce 1 est impactée par un faisceau laser 5. Ces impacts permettent de réaliser une creusure 2 de profondeur moyenne h et de réaliser une coloration au fond 6 de cette creusure.

Le laser utilisé pour les expériences décrites ci-dessous est un laser femtoseconde (par exemple du fabricant Amplitudes Systèmes comme décrit sur le site http://www.amplitude-systemes.com/), qui délivre des impulsions de 450 fs de durée avec un taux de répétition variable et ajustable entre 1 et 300kHz. La longueur d'onde utilisée est de 1030 nm, mais peut être modifiée à 515nm ou 343nm au travers d'un doubleur ou tripleur de fréquence par génération de deuxième ou troisième harmonique. La puissance moyenne délivrée est typiquement de 1.4W pour un taux de répétition de 1kHz et de 5.5W pour un taux de répétition de 300kHz. L'énergie moyenne est ajustable entre $18\mu J$ à 1.4mJ, et la polarisation en sortie du laser est linéaire.

Le système optique pour la mise en forme du faisceau est composé de différents éléments afin de régler l'énergie délivrée, la polarisation et la taille du faisceau. Le module de réglage de l'énergie est composé d'une lame demi-onde et d'un cube séparateur polarisant. La lame demi-onde permet de tourner la polarisation linéaire du faisceau laser. Le cube polariseur va transmettre la polarisation parallèle au plan de propagation du faisceau et dévier la polarisation perpendiculaire au plan de propagation. Ce dispositif permet donc de sélectionner avec précision l'énergie délivrée par le laser pour l'usinage. Une lame quart d'onde placée après le module de réglage de l'énergie permet de modifier la polarisation linéaire du faisceau laser en polarisation circulaire. La polarisation linéaire a un effet direct sur l'efficacité de l'ablation suivant son orientation par rapport à la trajectoire dessinée, et l'utilisation de la polarisation circulaire va homogénéiser cet effet. Cependant, l'invention peut être mise en œuvre aussi bien avec une polarisation linéaire qu'avec une polarisation circulaire.

Ensuite, le système afocal composé de deux lentilles (une lentille divergente et une lentille convergente) permet d'agrandir la taille du faisceau avant focalisation. L'agrandissement de la taille du faisceau avant focalisation permet de diminuer la dimension finale du faisceau focalisé. Les essais sont réalisés avec un afocal entre x2 et x8.

Une station de travail équipée de platines de translations rectilignes et rotative, d'un module de balayage, d'un système de visualisation de type microscope permettant un positionnement précis des échantillons, d'un système d'éclairage et d'un système d'aspiration des poussières est utilisée.

Le faisceau est balayé sur la cible par un dispositif de déviation optique du faisceau commandé par électronique. Il permet de réaliser les motifs souhaités via un logiciel de commande. La tête de balayage utilisée est une tête IntelliScan de ScanLab. L'ouverture du scanner est de 14mm et les vitesses de marquage atteignables sont de l'ordre de 4m/s pour une vitesse de positionnement de 11m/s. Les lentilles utilisées avec le module de balayage sont des lentilles f-theta ou des lentilles télécentriques. Les lentilles f-theta et télécentriques permettent d'obtenir un plan de focalisation sur tout le champ XY, contrairement aux lentilles standard pour lesquelles il est courbe. Cela permet de garantir une taille de faisceau focalisé constante sur tout le champ. Pour les lentilles f-theta, la position du faisceau est directement proportionnelle à l'angle appliqué par le scanner tandis que le faisceau est toujours normal à l'échantillon pour les lentilles télécentriques. Deux lentilles ont été testées au cours des essais, une lentille f-theta de focale 100mm et une lentille télécentrique de focale 60mm. La lentille de 100mm est préférentiellement utilisée.

Le balayage du faisceau sur la cible a une grande importance pour le résultat obtenu. En effet, la vitesse de balayage utilisée, ainsi que le pas du balayage, sont critiques pour obtenir simultanément le gravage et la coloration.

La figure 4 montre la position de trois impacts 11 d'impulsions de laser sur la pièce ou cible. Deux impacts immédiatement successifs sont alignés selon une première direction et distants d'une distance L (mesurée entre les centres de deux impacts successifs). Cette distance dépend du taux de répétition T et de la vitesse de balayage V (c'est-à-dire la vitesse de déplacement selon la première direction), avec $L = V/T$. Par exemple, avec V = 100mm/s et T = 100 kHz comme pour la plupart de nos essais, L = 1 $\mu$m. $R_{foc}$ est le rayon du faisceau sur la cible ou pièce, mesuré à mi-hauteur (on note aussi le diamètre du faisceau $D_{foc} = 2 \cdot R_{foc}$). Préférentiellement, le faisceau est focalisé sur la surface du composant à usiner.

Une fois une ligne de balayage terminée (selon la première direction), le faisceau est déplacé d'une distance L' selon une deuxième direction perpendiculaire à la première direction de balayage pour initier l'usinage d'une nouvelle ligne de balayage : cette distance L' est aussi appelée « pas de balayage ».

La distance L permet de définir un taux de recouvrement longitudinal et la distance L' permet de définir un taux de recouvrement latéral. Ces taux de recouvrement sont représentatifs de la surface commune à deux impacts adjacents selon la première direction (sens de balayage) et selon la deuxième direction. Le taux de recouvrement longitudinal O (c'est-à-dire selon la première direction) est donné par :

$$O = \frac{2\, R_{foc}^2\, Arcsin\left(\frac{h_1}{R_{foc}}\right) - h_1 L}{\pi\, R_{foc}^2}$$

si $2 \cdot R_{foc} \geq L$, et O = 0 si $2 \cdot R_{foc} < L$
avec

$$h_1 = \frac{1}{2}\sqrt{4\, R_{foc}^2 - L^2}$$

Le taux de recouvrement latéral O' (c'est-à-dire selon la deuxième direction) est défini de façon analogue, avec L' au lieu de L dans les formules ci-dessus.

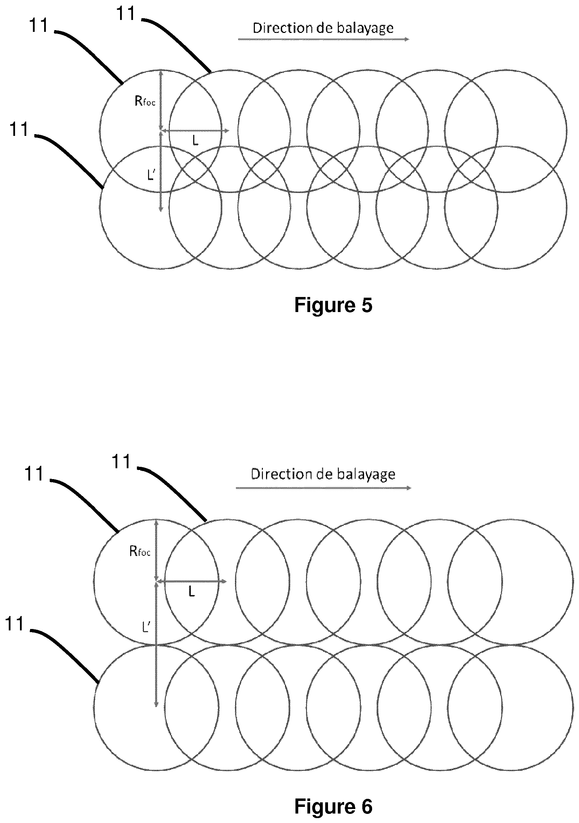

On peut ainsi avoir des balayages avec des taux de recouvrement longitudinal et latéral comparables comme représenté sur la figure 5, ou très différents comme représenté sur la figure 6 (où le taux de recouvrement latéral est quasiment nul). Il a été constaté que les taux de recouvrement longitudinal et latéral peuvent être permutés sans affecter le résultat obtenu : l'effet obtenu en mettant en œuvre un balayage avec un taux de recouvrement longitudinal O=t1 et latéral O'=t2 donnés est ainsi sensiblement équivalent à l'effet obtenu en mettant en œuvre un balayage avec un taux de recouvrement longitudinal t2 et latéral t1.

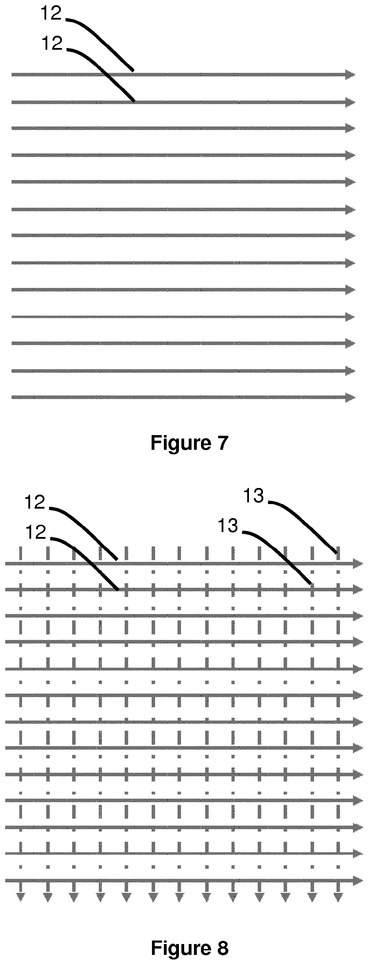

De plus, on peut effectuer un balayage dans la première direction 12 seulement (comme représenté à la figure 7, aussi appelé balayage « hatch » ou « simple hatch »), ou dans la première direction 12 puis dans une autre direction 13, par exemple perpendiculaire (« cross-hatch 0°-90 » comme représenté à la figure 8) ou à 45°. Les motifs obtenus au niveau micrométrique sur la surface ne seront évidemment pas les mêmes. Les stratégies de balayage sont très variables et dépendent beaucoup du matériau.

Les principaux paramètres influents du procédé sont :

- La puissance du faisceau au niveau de la cible. Le laser émet en général toujours à puissance maximale, et une atténuation est réalisée en sortie de laser par un système optique composé d'un polariseur linéaire et d'un cube polariseur.

- Le diamètre du faisceau au niveau de la cible, qui est ajusté par des diaphragmes placés sur le chemin optique avant la lentille de focalisation. Une diminution du diamètre de faisceau avant le système optique résulte en une augmentation du diamètre du faisceau sur la cible. Par exemple, sur l'installation utilisée pour les essais, un diamètre de 10mm avant la lentille de focalisation produit un faisceau de diamètre moyen sur la cible de $27\mu m$. D'autres essais ont été réalisés avec un faisceau de diamètre moyen sur la cible de $21\mu m$. Le diamètre du faisceau indiqué est le diamètre moyen à mi-hauteur, tel que mesuré par un analyseur de faisceau standard.

- Le taux de répétition des impulsions, qui est ajustable sur le système utilisé.

- L'énergie moyenne par impulsion, qui correspond à la puissance divisée par la fréquence. On en déduit une fluence effective, qui est égale à l'énergie divisée par la surface (calculée comme $\pi R_{foc}^2$).

- La durée d'impulsion, égale à 450fs dans la plupart des essais réalisés. Un autre laser, délivrant une durée d'impulsion de 200fs, a permis d'obtenir des résultats équivalents avec une adaptation des autres paramètres. On peut pour cela considérer la densité de puissance, égale à la fluence effective fois la durée de l'impulsion. En prenant pour exemple les conditions utilisées au tableau 1, on déduit une énergie moyenne de $38.6\mu J$, une fluence effective de $6.6$ J/cm$^2$, et une densité de puissance de $14.6$ $10^{12}$ W/cm$^2$. Selon les essais effectués, une densité de puissance supérieure à $3$ $10^{12}$ W/cm$^2$ est préférable pour obtenir des résultats satisfaisants.

- La longueur d'onde du faisceau. En général, la longueur d'onde délivrée par le laser de 1030nm est utilisée afin de disposer d'un maximum de puissance. Cependant, sur certains matériaux comme le saphir, il peut être avantageux d'utiliser une longueur d'onde de 343nm dans l'UV, où l'absorption est nettement plus élevée pour ce matériau, ce qui conduit à une vitesse d'ablation plus grande malgré la forte perte de puissance induite par le triplage de fréquence.

- Les taux de recouvrement longitudinal et latéral sont les paramètres les plus importants pour l'obtention de la coloration. L'influence du type de balayage est dans la plupart des cas secondaire, mais celui-ci peut aider à obtenir un meilleur résultat.

La vitesse de balayage détermine directement le taux de recouvrement si le taux de répétition des impulsions et le diamètre du faisceau sont fixes. Normalement, on choisit le taux de répétition le plus élevé possible afin de minimiser la durée de l'usinage, et un diamètre de faisceau faible afin de maximiser la fluence, et c'est donc la vitesse de balayage qui va être déterminante pour le taux de recouvrement.

Lors d'un usinage laser selon l'état de l'art, la vitesse de balayage est la plus élevée possible afin d'obtenir des taux d'ablation élevés, et donc des vitesses d'usinage rapides. Dans les conditions données au tableau 1, une telle vitesse d'usinage serait de 1000 mm/s, ce qui permet un gravage propre et rapide - mais cependant sans coloration significative en fond de creusure (voir par exemple, les caractères alphanumériques gravés 7 sur la surface intérieure du composant de la figure 2).

Contrairement à ce qui est communément admis, nous avons constaté qu'une diminution de la vitesse de balayage permet d'obtenir une bonne ablation, tout en produisant une coloration noire en fond de gravure. C'est le cas, par exemple, avec les conditions résumées au tableau 1 ci-dessous, avec une vitesse de balayage 10 fois inférieure à la vitesse adaptée pour un usinage traditionnel à l'aide d'un laser à impulsions femtosecondes. Ces conditions ont été utilisées pour obtenir notamment le motif sur la couronne de la figure 1, ainsi que les lettres gravées sur la surface supérieure 3 du composant de la figure 2. Cette image permet de bien se rendre compte de la différence entre une vitesse de balayage standard (conditions d'usinage standard) et nos conditions pour graver et colorer en même temps, sans modification des conditions d'ablation.

Tableau 1 - conditions typiques avec l'équipement et le montage optique utilisés pour obtenir un gravage avec coloration du fond de gravure sur de l'acier P558.

| P sur cible [W] | Diamètre moyen du faisceau à la cible [$\mu$m] | Taux de répétition [kHz] | Stratégie balayage | Pas du balayage [mm] | Vitesse de balayage [mm/s] | Distance entre deux impulsions [$\mu$m] | Nombre de passes |
|---|---|---|---|---|---|---|---|
| 3.86 | 27.3 | 100 | Cross hatch 0-90 | 0.01 | 100 | 1 | 10 |

Les conditions utilisées au tableau 1 permettent d'obtenir une profondeur de creusure moyenne de 90$\mu$m sur de l'acier P558, avec une excellente définition, une esthétique impeccable après nettoyage (ultrasons et lessive), et une bonne durabilité (aucune délamination de la coloration aux ultrasons, par exemple). On peut noter les observations suivantes :

- Un usinage équivalent en balayage simple (hatch) donne un résultat très satisfaisant.

- Une seule passe d'usinage suffit déjà pour obtenir une profondeur de gravure substantielle (entre 4 et 10 $\mu$m) et une coloration satisfaisante. En d'autres termes, l'enlèvement de matière provoque la réalisation d'une creusure d'une profondeur moyenne supérieure ou égale à 4 $\mu$m par passe.

Le tableau 2 résume les expériences effectuées à diverses vitesses de balayage, ainsi que le taux de recouvrement longitudinal correspondant et le résultat au niveau de la coloration. On voit que des vitesses autour de 100 mm/s (O = 95.3%) sont idéales dans le cas présent, et que les résultats à 250 mm/s et plus (O $\leq$ 88.2%) ne sont pas satisfaisants. Une vitesse de balayage trop faible n'est pas favorable, car la coloration ne présentera pas une adhésion satisfaisante : on constatera ainsi une délamination lors du lavage ultrasons pour des vitesses faibles (et donc des taux de recouvrement très élevés).

Pour l'acier, un taux de recouvrement supérieur à 90%, en particulier supérieur à 92%, plus particulièrement supérieur à 94%, permet d'obtenir des creusures avec coloration en fond de gravure en une seule étape de procédé, avec une profondeur ajustable avec le nombre de passes (balayages complets) effectuées. Bien entendu, le taux de recouvrement sera dans tous les cas strictement inférieur à 100% (usinage dynamique, avec un déplacement du faisceau).

Tableau 2 - influence de la vitesse de balayage pour l'obtention d'une coloration noire en fond de gravure sur de l'acier P558.

| Vitesse de balayage [mm/s] | 100 | 250 | 500 | 1000 |
|---|---|---|---|---|
| Taux de recouvrement longitudinal | 95.3 | 88.4 | 76.8 | 54.4 |
| Résultat | Couleur noire | Couleur grisâtre, non satisfaisante | Faible coloration, voire aucune coloration | Faible coloration, voire aucune coloration |

Par exemple, une coloration est dite noire lorsque l'indice CIE Lab L*a*b* présente une valeur telle que L*<20.

En ce qui concerne le taux de recouvrement latéral, le pas utilisé est de L' = 10$\mu$m, ce qui conduit à un taux O'=54.4%. Une augmentation du pas à 20$\mu$m et 30$\mu$m mène à un taux de recouvrement de 15.2 et 0%, respectivement.

Nous avons aussi constaté qu'il est préférable de focaliser le faisceau du laser sur la surface. Dans les conditions d'usinage standard, il est préconisé de défocaliser le faisceau (donc de placer le plan focal au-dessus ou en dessous de la surface) afin d'augmenter la vitesse de gravure.

La profondeur de la gravure peut être ajustée avec le nombre de passes, donc le nombre de répétitions du motif de balayage : plus le nombre de passes est élevé, plus la creusure sera profonde. Il semble aussi que l'aspect de la coloration noire soit meilleur quand la profondeur de gravure est importante.

L'utilisation d'un laser à impulsions femtosecondes est essentiel pour l'obtention d'un gravage avec coloration en fond de creusure lors de la même opération et avec une esthétique adaptée aux exigences de l'horlogerie. Avec un laser nanoseconde, par exemple, le gravage sera possible dans un premier temps, mais avec des dégâts d'usinage importants qui dégraderont de façon inacceptable l'aspect esthétique du composant horloger, et la coloration devra être effectuée dans un deuxième temps par un autre procédé. Nos essais ont montré que la durée des impulsions devait être dans tous les cas inférieure à 1ps. Il est ainsi assez remarquable de constater qu'avec les conditions choisies, il est possible de graver et de colorer en même temps sans saturer l'ablation.

La figure 3 illustre le procédé : les impulsions 5 du laser femtoseconde focalisées sur la surface permettent à la fois l'ablation du matériau, permettant un gravage par usinage, et la coloration en fond de gravure sans apport de matière, probablement par formation d'un dépôt et/ou d'une structure géométrique particulière en fond de gravure 6.

En plus de l'acier P558, l'acier 904L et le titane ont aussi été utilisés, avec des résultats en tout point équivalents. Pour le titane, les conditions suivantes sont particulièrement favorables : une puissance sur cible de 2.4W, un taux de répétition de 300 kHz, une stratégie de balayage croisé 0°-90° (passes perpendiculaires) (cross hatch), un pas de balayage de 5 μm, une vitesse de balayage de 400 m/s et un nombre de passes de 12.

Bien entendu, les conditions devront être ajustées suivant le type d'acier ou de titane ou d'autre matériau métallique utilisé, ainsi que pour le système d'usinage laser femtoseconde (laser, longueur d'onde du faisceau, durée d'impulsion, fluence, système optique, tête de balayage, etc) considéré. En particulier, la fluence, le taux de recouvrement longitudinal et latéral, la stratégie de balayage devront être optimisés pour chaque matériau.

Comme sur acier, le laser femtoseconde permet de réaliser un gravage et une coloration noire en fond de creusure sur des alliages d'or sans apport de matière externe.

Il semble selon nos essais qu'il soit favorable d'utiliser un balayage simple (simple hatch) ou balayage croisé (cross hatch), et un taux de recouvrement latéral très faible, voire proche de zéro ou même nul, pour obtenir une coloration noire en fond de gravure simultanément à l'ablation.

Le procédé permet d'obtenir une coloration noire en tout point satisfaisante sur différents types d'or, en particulier d'alliage d'or 18 carats, comme de l'or jaune, rose ou gris.

Tableau 3 - Conditions utilisées pour les essais sur l'or.

| Matériau | P sur cible [W] | Diamètre moyen du faisceau à la cible [μm] | Taux de répétition [kHz] | Stratégie balayage | Pas du balayage [mm] | Vitesse de balayage [mm/s] | Distance entre deux impulsions [μm] | Nombre de passes |
|---|---|---|---|---|---|---|---|---|
| Or jaune | 3.86 | 27.3 | 50 | Simple hatch | 0.03 | 10 | 0.2 | 1 |
| Or gris | 3.86 | 27.3 | 100 | Simple hatch | 0.03 | 20 | 0.2 | 1 |
| Or rose | 3.86 | 27.3 | 100 | Simple hatch | 0.03 | 20 | 0.2 | 1 |

Le taux de recouvrement longitudinal correspondant est de 99.1%, le taux de recouvrement latéral de 0. La profondeur moyenne obtenue est de 12μm sur l'or jaune, 11μm sur l'or rose et 4μm sur l'or gris.

Les conditions utilisées pour réaliser une gravure avec coloration en fond de creusure sur un composant en alliage Pt950 sont similaires à l'Au. En utilisant des conditions identiques à celles du tableau 1 sur l'acier P558, on obtient un effet grisâtre qui n'est pas satisfaisant. En diminuant le taux de recouvrement latéral (~0%) et en augmentant le taux de recouvrement longitudinal, par exemple supérieur à 99%, on obtient une coloration noire simultanément à l'ablation, comme indiqué dans le tableau ci-dessous.

Tableau 4 - Conditions utilisées pour les essais sur le platine. Le taux de recouvrement longitudinal correspondant est de 99.1%, le taux de recouvrement latéral de 0. La profondeur moyenne de creusure obtenue est de 15μm.

| P sur cible [W] | Diamètre moyen du faisceau à la cible [μm] | Taux de répétition [kHz] | Stratégie balayage | Pas du balayage [mm] | Vitesse de balayage [mm/s] | Distance entre deux impulsions [μm] | Nombre de passes |
|---|---|---|---|---|---|---|---|
| 3.86 | 27.3 | 100 | Simple hatch | 0.03 | 20 | 0.2 | 1 |

Il est très probable que des résultats similaires peuvent être obtenus sur d'autres matériaux métalliques comme l'aluminium, le Ni ou NiP déposé par LIGA, le Si ou le laiton.

Bien entendu, les conditions doivent être ajustées suivant le type de matériau, ainsi que pour le système d'usinage laser femtoseconde (laser, longueur d'onde du faisceau, durée d'impulsion, fluence, système optique, tête de balayage, etc) considéré. En particulier, la fluence, le taux de recouvrement longitudinal et latéral, la stratégie de balayage devront être optimisés pour chaque matériau, notamment en fonction de l'équipement et/ou du montage optique utilisés.

Il est de plus possible, grâce au laser femtoseconde, de graver de façon propre une couche déposée en surface, comme par exemple une couche de photoresist ou une couche mince, par exemple une couche mince déposée par un procédé galvanique, ou PVD, ou CVD ou tout autre procédé comparable, puis de graver le matériau de base. Cela permet, par exemple, de graver un composant en acier revêtu d'une couche d'or galvanique et de graver et colorer le fond de la creusure lors de la même opération d'usinage par laser femtoseconde.

Il est également possible de réaliser une gravure profonde et une coloration lors de la même opération avec un laser femtoseconde sur des matériaux comme les céramiques (comme par exemple l'alumine ou la zircone), le rubis ou le saphir. Cependant, contrairement aux métaux mentionnés ci-dessus, les conditions utilisées pour générer la coloration mènent à une saturation de l'ablation, et il est donc difficile d'obtenir une creusure de profondeur importante ($\geq 40\mu m$).

Pour ces matériaux, on procède alors préférentiellement de la manière suivante : on grave d'abord avec un premier jeu de paramètres, puis on effectue une dernière passe avec un deuxième jeu de paramètres pour générer la fin de la gravure et la coloration. Les paramètres modifiés peuvent inclure le taux de recouvrement, ainsi que le type de balayage utilisé. Ainsi, un balayage simple semble être favorable pour obtenir une coloration blanche en fond de creusure pour une céramique, un saphir ou un rubis.

Par exemple, une coloration est dite blanche lorsque l'indice CIE Lab L*a*b*, présente une valeur telle que L*>90.

A nouveau, les conditions d'usinage et les paramètres devront être ajustés suivant le type de matériau et le système d'usinage laser femtoseconde considéré. Des exemples à titre d'illustration sont donnés ci-dessous pour le rubis et le saphir.

Des essais sur rubis ont permis d'obtenir des creusures avec dépôt blanc en fond de creusure. L'important est d'utiliser un taux de recouvrement important et une forte puissance pour obtenir la coloration.

Les paramètres utilisés pour les essais sur rubis sont les suivants :

Tableau 5 - Conditions utilisées pour les essais de coloration sur le rubis.

| P sur cible [W] | Diamètre moyen du faisceau à la cible [$\mu$m] | Taux de répétition [kHz] | Stratégie balayage | Pas du balayage [mm] | Vitesse de balayage [mm/s] | Distance entre deux impulsions [$\mu$m] | Nombre de passes |
|---|---|---|---|---|---|---|---|
| 2.40 | 28.4 | 10 | simple hatch | 0.003 | 6.3 | 0.63 | 1 |

Le procédé est donc différent que pour les matériaux métalliques (Acier, Au, Pt), dans le sens que la coloration est préférentiellement réalisée lors de la dernière passe de gravure/usinage, en utilisant des paramètres différents de ceux des passes précédentes qui permettent un gravage important. Typiquement, la vitesse de balayage est plus de 10 fois plus lente pour la coloration que pour le gravage (par exemple, 6.3 mm/s pour l'étape de gravage / coloration et 75 mm/s pour le gravage sans coloration). La coloration obtenue est blanche, donnant un excellent contraste entre le rubis rouge et le fond de creusure blanc, avec un très bon rendu esthétique.

Lors des essais effectués, pour la dernière passe combinée de gravage et de coloration, le taux de recouvrement longitudinal est plus élevé que pour l'acier, de l'ordre de 97.2% ; le taux de recouvrement latéral est aussi plus élevé que pour l'acier, de l'ordre de 86.6%. Lors des passes de gravage sans coloration, le taux de recouvrement longitudinal est de 66.8% ; le taux de recouvrement latéral est de 45.8%.

Des essais sur saphir ont aussi permis d'obtenir des creusures avec dépôt blanc en fond de creusure. L'important est d'utiliser un taux de recouvrement important et une forte puissance pour obtenir la coloration.

Tableau 6 - Conditions utilisées pour les essais de gravage et de coloration sur le saphir. La profondeur de creusure moyenne est de 15$\mu$m.

| P sur cible [W] | Diamètre moyen du faisceau à la cible [$\mu$m] | Taux de répétition [kHz] | Stratégie balayage | Pas du balayage [mm] | Vitesse de balayage [mm/s] | Distance entre deux impulsions [$\mu$m] | Nombre de passes |
|---|---|---|---|---|---|---|---|
| 4.0 | 28.4 | 60 | Simple hatch | 0.003 | 6 | 0.1 | 1 |

Lors des essais effectués, pour la dernière passe combinée de gravage et de coloration, le taux de recouvrement longitudinal est plus élevé que pour l'acier, de l'ordre de 99.6% ; le taux de recouvrement latéral est aussi est plus élevé que pour l'acier, de l'ordre de 86.6%. Lors des passes de gravage sans coloration, la vitesse de balayage est plus élevée et le pas est plus important : le taux de recouvrement longitudinal est de 94.8% ; le taux de recouvrement latéral est de 45.8%.

Bien entendu, les conditions doivent être ajustées suivant le type de matériau, ainsi que pour le système d'usinage laser femtoseconde (laser, longueur d'onde du faisceau, durée d'impulsion, fluence, système optique, tête de balayage, etc) considéré. En particulier, la fluence, le taux de recouvrement longitudinal et latéral, la stratégie de balayage devront être optimisés pour chaque matériau, notamment en fonction de l'équipement et/ou du montage optique utilisés.

Pour ces matériaux également, il est aussi possible, grâce au laser femtoseconde, de graver de façon propre une couche déposée en surface, comme par exemple une couche de photoresist ou une couche mince, par exemple une couche mince déposée par un procédé galvanique, ou PVD, ou CVD ou tout autre procédé comparable, puis de graver le matériau de base. Cela permet, par exemple, de graver un composant en céramique revêtu d'une couche d'or galvanique et de graver et colorer le fond de la creusure lors de la même opération d'usinage par laser femtoseconde.

Le tableau ci-dessous résume les paramètres importants pour obtenir l'effet combiné et simultané entre gravage et coloration par usinage laser femtoseconde, avec des valeurs typiques à titre d'exemple sur les différents types de matériaux étudiés.

| Paramètre | Acier | Au/Pt | Céramique |
|---|---|---|---|
| Pas latéral | $10\mu m$ | $30\mu m$ | $<10\mu m$ |
| Taux de recouvrement latéral | $\sim 50\%$ | $\sim 0\%$ | $>60\%$ |
| Taux de recouvrement longitudinal | $>90\%$ | $>95\%$ | $>95\%$ |
| Balayage | Simple ou croisé | simple | simple |
| Etape préalable de gravure pour obtenir une profondeur importante ($\geq 40\mu m$) | Non | Non | Oui |

Pour chaque classe de matériaux, il existe des combinaisons de taux de recouvrement latéral favorables :

- Aciers, titane : taux latéral entre 0 et <100% (c'est-à-dire strictement inférieur à 100%), en particulier entre 20 et <100%, préférentiellement entre 50 et <100% ;

- métaux précieux, notamment or et platine : sensiblement nul ;

- céramiques, notamment rubis: entre 50 et <100%, préférentiellement entre 80 et <100%, voire entre 90 et <100%.

Bien entendu, un autre laser à impulsions femtoseconde que celui utilisé pour les essais pourrait donner des résultats sensiblement équivalents, par exemple un laser avec une durée d'impulsion et/ou une longueur d'onde différente et/ou un diamètre de faisceau différent. Les paramètres de procédé (taux de recouvrement, vitesse de balayage, puissance, énergie moyenne) devront être le cas échéant adaptés.

Le procédé permet de réaliser une gravure d'un composant métallique ou céramique avec une coloration du fond de gravure en une seule opération par usinage avec un laser à impulsion femtoseconde.

De préférence, les conditions d'usinage utilisées pour la gravure et pour la coloration sont similaires, voire identiques. Cependant, il est aussi envisageable de réaliser la gravure avec un premier jeu de paramètres, et de réaliser la coloration combinée à une gravure dans la foulée avec un deuxième jeu de paramètres.

La coloration réalisée sur un composant métallique, notamment sur un matériau de type acier ou métal précieux, est de préférence noire, voire noire profond, voire équivalente à celle obtenue par un gravage électrochimique suivi d'un traitement au Cr(VI).

La coloration réalisée sur un composant céramique, notamment sur un matériau de saphir, rubis, alumine ou zircone, est de préférence blanche.

Composition des aciers testés

| [% poids] | Fe | Ni | Cr | Mn | Mo | Cu | N | C |
|---|---|---|---|---|---|---|---|---|
| 904L | 51 | 24-26 | 19-21 | - | 4-5 | 1-2 | 0.04-0.15 | <0.06 |

(suite)

| [% poids] | Fe | Ni | Cr | Mn | Mo | Cu | N | C |
|---|---|---|---|---|---|---|---|---|
| P558 | 69.3 | - | 17 | 10 | 3 | - | 0.49 | 0.2 |

Composition des alliages d'or testés

| [% poids] | Au | Ag | Cu | Pt | Pd | Fe |
|---|---|---|---|---|---|---|
| Or jaune | 75 | 12.5 | 12.5 | | | |
| Or rose selon EP1512765 | ≥75 | | ≥18 | ≥0.5 | | |
| Or gris | 75 | | 4 | | 15 | 6 |

Dans tous les cas, l'enlèvement de matière résultant du procédé de gravage et de coloration selon l'invention provoque la réalisation d'une creusure d'une profondeur moyenne supérieure ou égale à 4 $\mu$m par passe, en particulier supérieure ou égale à 8 $\mu$m par passe. Par profondeur moyenne, on entend ici la différence de hauteur entre les moyennes arithmétiques des valeurs de l'ordonnée des points de profils de rugosité mesurés au fond de la creusure (zone affectée par le procédé selon l'invention) d'une part, et sur la surface non traitée à proximité de la creusure, d'autre part.

Alternativement, dans tous les cas, l'enlèvement de matière résultant du procédé de gravage et de coloration selon l'invention provoque la réalisation d'une creusure d'une profondeur minimale supérieure ou égale à 4 $\mu$m par passe, en particulier supérieure ou égale à 8 $\mu$m par passe. Par profondeur minimale, on entend ici la profondeur mesurée entre la surface non traitée à proximité de la creusure et les points les plus hauts du fond de gravure.

**Revendications**

1. Procédé de gravage d'un élément (1 ; 3), comprenant une application sur l'élément d'un faisceau laser (5) dont les impulsions durent chacune moins d'une picoseconde,
**caractérisé par** la réalisation d'un usinage ou enlèvement de matière sur l'élément et d'une coloration de la surface de fond (6) d'usinage, l'enlèvement de matière et la coloration étant réalisés simultanément,

- l'élément étant en acier ou en titane et le diamètre du faisceau, la vitesse de balayage de l'élément et la fréquence de répétition des impulsions étant choisis tels que le taux de recouvrement dans une première direction, notamment une direction longitudinale est supérieur à 85%, voire supérieur à 90%, voire supérieur à 92%, voire supérieur à 94%, et tels que le taux de recouvrement dans une deuxième direction, notamment une direction latérale est compris entre 0% et <100%, en particulier entre 20% et <100%, préférentiellement entre 50% et <100%, ou
- l'élément étant en alliage d'or ou en alliage de platine et le diamètre du faisceau, la vitesse de balayage de l'élément et la fréquence de répétition des impulsions étant choisis tels que le taux de recouvrement dans une première direction, notamment une direction longitudinale est supérieur à 90%, voire supérieur à 95%, et tels que le taux de recouvrement dans une deuxième direction, notamment une direction latérale est nul ou sensiblement nul, ou
- l'élément étant en céramique, en rubis ou en saphir et le diamètre du faisceau, la vitesse de balayage de l'élément et la fréquence de répétition des impulsions étant choisis tels que le taux de recouvrement dans une première direction, notamment une direction longitudinale est supérieur à 90%, voire supérieur à 95%, et tels que le taux de recouvrement dans une deuxième direction, notamment une direction latérale est compris entre 50% et <100%, préférentiellement entre 80 et <100%, voire entre 90 et <100%.

2. Procédé selon la revendication précédente, **caractérisé en ce que** les zones d'impact sur l'élément de deux impulsions se recouvrent partiellement, en particulier les zones d'impact sur l'élément de deux impulsions successives se recouvrent partiellement.

3. Procédé selon l'une des revendications précédentes, **caractérisé en ce que** le diamètre du faisceau, la vitesse de balayage de l'élément et la fréquence de répétition des impulsions sont choisis tels que le taux de recouvrement dans une première direction, notamment une direction longitudinale est supérieur à 90%, voire supérieur à 92%, voire supérieur à 94%.

4. Procédé selon l'une des revendications précédentes, **caractérisé en ce que** le diamètre du faisceau, la vitesse de balayage de l'élément et la fréquence de répétition des impulsions sont choisis tels que le taux de recouvrement dans une première direction, notamment une direction longitudinale est inférieur à 100%, voire inférieur à 99.8%.

5. Procédé selon l'une des revendications précédentes, **caractérisé en ce que** l'élément est en acier, notamment en acier 904L ou en acier P558 ou en titane.

6. Procédé selon l'une des revendications précédentes, **caractérisé en ce que** l'élément est en matériau précieux, notamment en alliage d'or 18 carats, ou en alliage de platine Pt950.

7. Procédé selon l'une des revendications précédentes, **caractérisé en ce que** l'élément est en céramique, en rubis ou en saphir.

8. Procédé selon l'une des revendications précédentes, **caractérisé en ce que** l'enlèvement de matière provoque la réalisation d'une creusure d'une profondeur moyenne supérieure ou égale à 4 $\mu$m par passe, en particulier supérieure ou égale à 8 $\mu$m par passe.

9. Procédé selon l'une des revendications précédentes, **caractérisé en ce que** l'application du faisceau laser induit sur l'élément une densité de puissance supérieure à $3\times10^{12}$ W/cm$^2$, voire supérieure à $5\times10^{12}$ W/cm$^2$.

**Patentansprüche**

1. Gravierungsverfahren eines Elements (1; 3), umfassend ein Anwenden, auf das Element, eines Laserstrahls (5), dessen Impulse jeweils weniger als eine Picosekunde dauern,
**dadurch gekennzeichnet, dass** mittels der Durchführung einer maschinellen Bearbeitung oder einer Entfernung von Material auf dem Element und einer Färbung der Oberfläche des Bodens (6) der maschinellen Bearbeitung die Entfernung von Material und die Färbung gleichzeitig durchgeführt werden,

- wobei das Element aus Stahl oder aus Titan ist, und der Durchmesser des Strahls, die Geschwindigkeit der Abtastung des Elements und die Wiederholungsfrequenz der Impulse derart ausgewählt werden, dass der Abdeckungsgrad in einer ersten Richtung, insbesondere einer Längsrichtung, größer ist als 85 %, sogar größer als 90 %, sogar größer als 92 %, sogar größer als 94 %, und dass der Abdeckungsgrad in einer zweiten Richtung, insbesondere einer Seitenrichtung, zwischen 0 % und < 100 % beträgt, insbesondere zwischen 20 % und < 100 %, vorzugsweise zwischen 50 % und < 100 %, oder
- wobei das Element aus einer Legierung oder aus einer Platinlegierung ist, und der Durchmesser des Strahls, die Geschwindigkeit der Abtastung des Elements und die Wiederholungsfrequenz der Impulse derart ausgewählt werden, dass der Abdeckungsgrad in einer ersten Richtung, insbesondere einer Längsrichtung, größer ist als 90 %, sogar größer als 95 %, und dass der Abdeckungsgrad in einer zweiten Richtung, insbesondere einer Seitenrichtung, Null oder im Wesentlichen Null ist, oder
- wobei das Element aus Keramik, aus Rubin oder aus Saphir ist, und der Durchmesser des Strahls, die Geschwindigkeit der Abtastung des Elements und die Wiederholungsfrequenz der Impulse derart ausgewählt werden, dass der Abdeckungsgrad in einer ersten Richtung, insbesondere einer Längsrichtung, größer ist als 90 %, sogar größer als 95 %, und dass der Abdeckungsgrad in einer zweiten Richtung, insbesondere einer Seitenrichtung, zwischen 50 % und < 100 % beträgt, vorzugsweise zwischen 80 und < 100 %, sogar zwischen 90 und < 100 %.

2. Verfahren nach dem der vorhergehenden Anspruch, **dadurch gekennzeichnet, dass** sich die Aufprallzonen auf dem Element von zwei Impulsen teilweise decken, insbesondere sich die Aufprallzonen auf dem Element von zwei aufeinanderfolgenden Impulsen teilweise decken.

3. Verfahren nach einem der vorhergehenden Ansprüche, **dadurch gekennzeichnet, dass** der Durchmesser des Strahls, die Geschwindigkeit der Abtastung des Elements und die Wiederholungsfrequenz der Impulse derart ausgewählt werden, dass der Abdeckungsgrad in einer ersten Richtung, insbesondere einer Längsrichtung, größer ist als 90 %, sogar größer als 92 %, sogar größer als 94 %.

**4.** Verfahren nach einem der vorhergehenden Ansprüche, **dadurch gekennzeichnet, dass** der Durchmesser des Strahls, die Geschwindigkeit der Abtastung des Elements und die Wiederholungsfrequenz der Impulse derart ausgewählt werden, dass der Abdeckungsgrad in einer ersten Richtung, insbesondere einer Längsrichtung, kleiner ist als 100 %, sogar kleiner als 99,8 %.

**5.** Verfahren nach einem der vorhergehenden Ansprüche, **dadurch gekennzeichnet, dass** das Element aus Stahl ist, insbesondere aus Stahl 904L oder aus Stahl P558 oder aus Titan.

**6.** Verfahren nach einem der vorhergehenden Ansprüche, **dadurch gekennzeichnet, dass** das Element aus Edelmetall ist, insbesondere aus einer 18 Karat Goldlegierung oder aus einer Platinlegierung Pt950.

**7.** Verfahren nach einem der vorhergehenden Ansprüche, **dadurch gekennzeichnet, dass** das Element aus Keramik, aus Rubin oder aus Saphir ist.

**8.** Verfahren nach einem der vorhergehenden Ansprüche, **dadurch gekennzeichnet, dass** die Entfernung von Material die Bildung einer Vertiefung mit einer mittleren Tiefe von größer oder gleich 4 $\mu$m pro Durchgang erzeugt, insbesondere größer oder gleich 8 $\mu$m pro Durchgang.

**9.** Verfahren nach einem der vorhergehenden Ansprüche, **dadurch gekennzeichnet, dass** das Anwenden des Laserstrahls auf dem Element eine Leistungsdichte von größer als 3 x 10$^{12}$ W/cm$^2$ induziert, sogar größer als 5 x 10$^{12}$ W/cm$^2$.

**Claims**

**1.** A process for engraving an element (1; 3), comprising applying to the element a laser beam (5) the pulses of which each last less than one picosecond, so as to machine or remove material from the element and color the machined bottom surface (6), the removal of material and the coloring being achieved simultaneously,

- the element is made of steel or of titanium and the diameter of the beam, the speed of scanning of the element and the repetition frequency of the pulses are chosen such that the degree of overlap in a first direction, especially a longitudinal direction, is higher than 85% or even higher than 90% or even higher than 92% or even higher than 94%, and such that such that the degree of overlap in a second direction, especially a lateral direction, is comprised between 0% and <100%, in particular between 20% and <100% and preferably between 50% and <100%; or
- the element is made of a gold alloy or of a platinum alloy and the diameter of the beam, the speed of scanning of the element and the repetition frequency of the pulses are chosen such that the degree of overlap in a first direction, especially a longitudinal direction, is higher than 90% or even higher than 95% and such that the degree of overlap in a second direction, especially a lateral direction, is zero or substantially zero; or
- the element is made of ceramic, of ruby or of sapphire and the diameter of the beam, the speed of scanning of the element and the repetition frequency of the pulses are chosen such that the degree of overlap in a first direction, especially a longitudinal direction, is higher than 90% or even higher than 95% and such that the degree of overlap in a second direction, especially a lateral direction, is comprised between 50% and <100%, preferably between 80 and <100% or even between 90 and <100.

**2.** The process as claimed in Claim 1, wherein the regions of impact on the element of two pulses partially overlap, in particular the regions of impact on the element of two successive pulses partially overlap.

**3.** The process as claimed in one of the preceding claims, wherein the diameter of the beam, the speed of scanning of the element and the repetition frequency of the pulses are chosen such that the degree of overlap in a first direction, especially a longitudinal direction, is higher than 90% or even higher than 92% or even higher than 94%.

**4.** The process as claimed in one of the preceding claims, wherein the diameter of the beam, the speed of scanning of the element and the repetition frequency of the pulses are chosen such that the degree of overlap in a first direction, especially a longitudinal direction, is lower than 100% or even lower than 99.8%.

**5.** The process as claimed in one of the preceding claims, wherein the element is made of steel, especially 904L steel or P558 steel or of titanium.

**6.** The process as claimed in one of the preceding claims, wherein the element is made of a precious material, especially of an alloy of 18 carat gold or of an alloy of Pt950 platinum.

**7.** The process as claimed in one of the preceding claims, wherein the element is made of ceramic, of ruby or of sapphire.

**8.** The process as claimed in one of the preceding claims, wherein the removal of material causes a recess to be produced with an average depth larger than or equal to 4 $\mu$m per pass and in particular larger than or equal to 8 $\mu$m per pass.

**9.** The process as claimed in one of the preceding claims, wherein application of the laser beam results, on the element, in a power density higher than $3\times10^{12}$ W/cm$^2$, even higher than $5\times10^{12}$ W/cm$^2$.

**Figure 1**

**Figure 2**

**Figure 3**

Direction de balayage

V

Recouvrement longitudinal
Recouvrement latéral

**Figure 4**

**Figure 5**

**Figure 6**

Figure 7

Figure 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004195221 A1
- EP 0647720 A
- US 6180318 B
- WO 9411146 A
- WO 2011163550 A
- WO 2008097374 A
- EP 1512765 A